# EUROPEAN PATENT APPLICATION

(11) **EP 2 584 337 A1**
(43) Date of publication of application: **24.04.2013**
(21) Application number: 11795645.8
(22) Date of filing: 10.06.2011
(51) Int. Cl.: G01N 1/28

(54) **BIOLOGICAL SAMPLE PRETREATMENT METHOD AND APPARATUS**

(30) Priority: 15.06.2010 JP 2010136302
(71) Applicant: Hitachi High-Technologies Corporation, Tokyo 105-8717 (JP)
(72) Inventor: KANDA Katsuhiro, Hitachinaka-shi Ibaraki 312-8504 (JP); NOGAMI Makoto, Hitachinaka-shi Ibaraki 312-8504 (JP); ITO Shinya, Hitachinaka-shi Ibaraki 312-8504 (JP); WAKI Izumi, Hitachinaka-shi Ibaraki 312-8504 (JP)
(74) Representative: Calderbank, Thomas Roger
(86) International application number: PCT/JP2011/063309
(87) International publication number: WO 2011/158738

(57) **Abstract**

A sample treatment apparatus is realized which allows a filtrate after reaction to be supplied to a solid phase extraction treatment without primary collection. A necessary amount of a solid phase extracting agent (308) is added to a solid phase extraction device (303) for conditioning. An aqueous solution is added to the solid phase extracting agent (308) and supernatants are discarded. A filter device (302) is attached to an opening of the solid phase extraction (303) and a sample is added into a filter reservoir (304). A hemolyzing agent is added to the sample, and they are stirred sufficiently to cause disruption of blood cells. A protein-denaturing solution is added to the mixture, and they stirred sufficiently to denature proteins contained in the sample thereby forming aggregates. They are centrifuged to leave the aggregate in the filter device (302), and the filtrate is supplied to the solid phase extracting agent through a filter unit (305) without collecting the filtrate. A necessary amount of a washing solution is added to the solid phase extraction device (303), the resulting mixture is stirred and centrifuged, and supernatants are discarded. A necessary amount of an eluate is added into the solid phase extraction device (303), the resulting mixture is fully stirred and centrifuged, and supernatants are discarded.

## Description

### Technical Field

The present invention relates to a biological sample pretreatment method of and apparatus for performing a pretreatment for practicing a hemolysis treatment, a deproteinization treatment and a solid phase extraction treatment of a specimen.

### Background Art

For extraction of an aimed component from a blood sample comprising multiple components, there are various techniques based on using physical properties such as size, weight, and shape, and biochemical properties such as solubility and affinity of the aimed component. In particular, regarding the extraction of micro amount of components in a biological sample such as a blood, separation techniques such as chromatography have been progressed, and packed agents suitable for aimed components have been developed and methods therefor have been optimized. Even when such separation techniques at high level are used, sample preparation and partial purification are essential for efficiently extracting an aimed micro amount of component from a blood comprising various cells and multiple components that show different properties in order to put the sample into an extractable state.

Clinical inspection of measuring micro amount of components in a blood includes, for example, therapeutic drug monitoring (TDM). TDM is applied, for example, to drugs having a narrow therapeutic region showing pharmaceutical effect, which is an inspection necessary for practicing an appropriate design of dosage on every patient by confirmation of the concentration of a drug in a patient blood with lapse of time after administration.

Drugs as the target of TDM include anti-epilepsy drug, anti-bacterial drug, immunosuppressant, anti-arrhythmic drug, psychotropic drug, etc. Most of drugs are distributed in serum. However, since a drug, for example, an immunosuppressant applied to a transplantation patient has high lipid solubility and penetration to blood cells, measurement of the concentration of the drug in the blood requires a pretreatment in which the contents of a blood cell are taken out by hemolysis and then the drug adsorbed to proteins, etc. are extracted.

Hemolysis can be practiced by applying chemical, physical, or biological principle.

For example, a chemical method of hemolysis includes dissolving or disruption of a lipid as a constituent of cellular membranes by various kinds of solvents or surfactants, thereby causing hemolysis.

Further, a physical method includes, for example, applying pressure, centrifugation, stirring, freezing and thawing, hypotonic condition, etc. A biological method includes formation of trans-membrane protein complexes caused by antibody and complement fixation to blood cells, or pore-forming in blood cell membranes by hemolysin yielded from pathogenic bacteria.

On the other hand, a method of collecting an aimed component adsorbed to proteins in the blood includes deproteinization or liquid/liquid extraction. By adding an organic solvent to a sample after hemolysis is undergone, the aimed component is extracted into the organic solvent and the proteins are denatured and, after aggregated proteins and supernatants is separated by centrifugation generally, a supernatant fraction is collected. The deproteinization treatment is a step of removing proteins contained in various forms and in a great amount in the blood by aggregation. After such treatment, the sample derived from the whole blood is conditioned to a state that can be handled in the same manner as serum or plasma specimens.

Since an organic solvent also has a hemolytic effect as described above, there is also a method of directly adding the solvent to a blood thereby performing hemolysis, liquid/liquid extraction, and deproteinization. Further, there is also a method of adding zinc sulfate described above for supplementing the deproteinizing effect.

Since the blood cell penetrating drug can be collected in the state of a solution by applying the treatment as described above to a whole blood specimen, the treated solution can be supplied to a purification operation, for example, a solid phase extraction or liquid chromatographic separation. Generally, the collected supernatants after liquid/liquid extraction are dried up and then dissolved again by an eluate of an appropriate volume thereby decreasing the liquid volume and concentrating the aimed component. Subsequently, the re-dissolved product is supplied to a liquid chromatograph mass spectrometer (LCMS), etc. to perform separation and purification and detection of the aimed component after concentration and the aimed component is identified and analyzed quantitatively.

The known technique of the solid phase extraction includes the technique described in patent document 1. The technique described in the patent document 1 provides a solid phase extraction column, for example, of a structure in which a solid phase extracting agent is packed in a syringe-type vessel and upstream and downstream sides of the packed agent are put between filters (frits) for holding the packed agent.

### Prior Art Literature

### Patent Literature

Patent Document 1
   Japanese Patent No. 4062637

### Summary of the Invention

### Problem to be Solved by the Invention

Since an aimed component by a micro amount is contained in a biological sample such as a blood, it is necessary to avoid consumption thereof as much as possible in a pretreatment. However, for a biological sample, a sample after filtration treatment of a reaction product is temporarily collected and contained in a vessel or the like and then put to a solid phase extraction treatment by using other vessel or the like in the prior art.

Accordingly, there may be a possibility of causing sample loss or contamination with other sample, etc. upon primary collection described above.

Further, vessels, chips, etc. for primary collection are necessary and the cost and cleaning therefor are necessary.

Further, complicate treatment as described above is necessary for the reaction of the sample, which is troublesome and time consuming.

An object of the present invention is to realize a biological sample pretreatment method and apparatus which allow a filtrate after reaction to be supplied to a solid phase extraction treatment without primary collection.

### Means for Solving the Problem

To achieve the purpose described above, the present invention provides the following configuration.

A biological sample pretreatment method and apparatus according to the present invention supply a biological sample and a deproteinizing reagent to a filter unit housed in a filter device, supply a filtrate from the filter unit to the solid phase extracting agent, the solid phase extracting agent being contained in a solid phase extraction device, and extract the solid phase of the biological sample from the filtrate contained in the solid phase extracting agent.

### Effects of the Invention

A sample treatment method and apparatus can be realized which allow the filtrate after reaction to be supplied to the solid phase extraction treatment without primary collection.

### Brief Description of the Drawings

Fig. 1 is a view for explaining a pretreatment flow for a sample pretreatment method in Example 1 of the present invention.
Fig. 2 is a graph showing a solubility of an immunosuppressant to methanol.
Fig. 3 is an explanatory view of a suspension type sample pretreatment apparatus as Example 2 of the invention.
Fig. 4 is a view showing a syringe type sample pretreatment apparatus as Example 3 of the invention.
Fig. 5 is an explanatory view for an operation method when a sample is prepared by using the sample pretreatment apparatus as Example 3 of the invention.
Fig. 6 is an explanatory view of a sample pretreatment apparatus as Example 4 of the invention.
Fig. 7 is an explanatory view for an operation method when a sample is prepared by using a sample pretreatment apparatus as Example 4 of the invention.
Fig. 8 is an explanatory view of a sample pretreatment apparatus as Example 5 of the invention.
Fig. 9 is an explanatory view of a sample pretreatment apparatus as Example 6 of the invention.
Fig. 10A is an explanatory view of a sample pretreatment apparatus as Example 7 of the invention.
Fig. 10B is an explanatory view of a sample pretreatment apparatus as Example 7 of the invention.
Fig. 10C is an explanatory view of a sample pretreatment apparatus as Example 7 of the invention.
Fig. 11A is an explanatory view for a modified example of Example 7 of the invention.
Fig. 11B is an explanatory view for a modified example of Example 7 of the invention.
Fig. 12 is an explanatory view for an operation of the sample pretreatment apparatus as Example 7 of the invention.
Fig. 13 is an explanatory view of a plate type sample pretreatment apparatus as Example 8 of the invention.
Fig. 14 is an explanatory view of a sample pretreatment apparatus as Example 9 of the invention.

### Mode for Carrying out the Invention

Examples of the present invention are to be described with reference to the accompanying drawings.

### Example 1

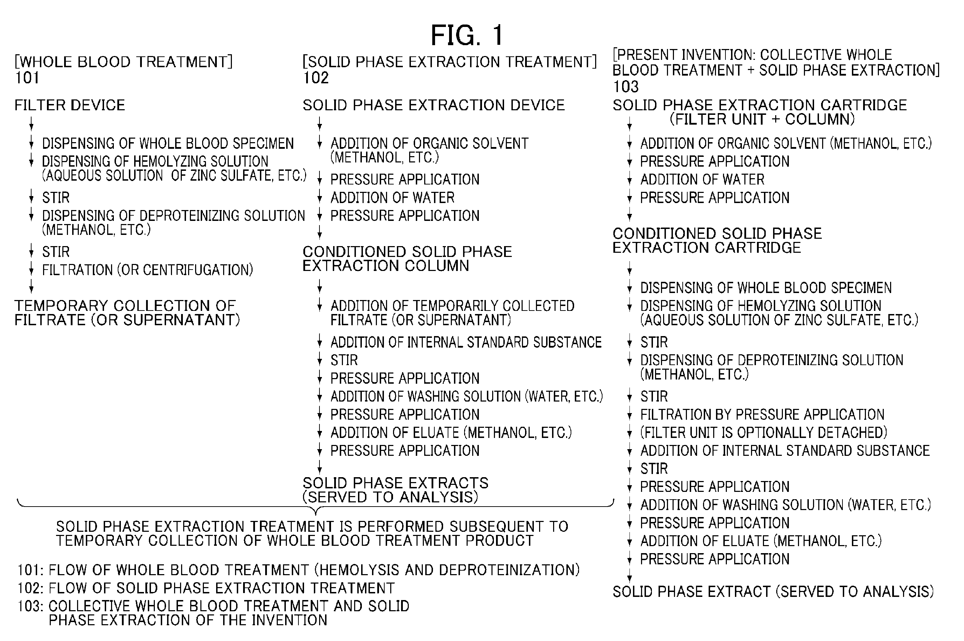

Fig. 1 is a view for explaining a pretreatment flow in a sample pretreatment method in Example 1 of the present invention. A pretreatment flow 103 in Fig. 1 is a pretreatment flow in Example 1 of the invention in which a whole blood treatment and a solid phase extraction treatment are performed collectively.

Fig. 1 shows a flow for performing the whole blood treatment (treatment flow 101) and the solid phase extraction treatment (treatment flow 102) for comparison with the pretreatment in the invention.

### (Sample preparation step and solubility of immunosuppressant)

In the process flow 101, a whole blood specimen is dispensed to filter device and, further, a hemolyzing solution (for example, aqueous solution of zinc sulfate, etc.) is dispensed and then stirred. Subsequently, a deproteinizing solution (methanol, etc.) is dispensed, stirred, and then filtered (or centrifugally separated).

In the case of a drug, for example, an immunosuppressant, having high hydrophobicity and blood penetration, hemolysis is necessary at first for extraction of an aimed component from a patient specimen. Hemolysis is performed, for example, by adding H₂O to a whole blood specimen thereby a hypotonic condition and disrupting blood cells.

Further, for removing proteins as miscellaneous components in the whole blood, proteins are denatured and aggregated by an organic solvent and supernatants are collected by centrifugation or filtration. A clean-up effect can be expected in the deproteinization treatment also for the specimen other than the whole blood (for example, serum, plasma, urine, body fluid, etc.).

Then, in the process flow 102, an organic solvent is added to a solid phase extracting agent, pressure is applied, water is added, pressure is applied to condition the solid phase extracting agent, a temporarily collected filtrate (supernatant) is added to the solid phase extracting agent, an internal standard substance is added and then they are stirred. Then, application of pressure → addition of washing solution → application of pressure → addition of an eluant (methanol, etc.) → application of pressure are performed to adsorb an aimed component and, after the component adsorbed non-specifically is removed by cleaning, the aimed component is eluted and collected to complete the specimen preparation.

Example 1 of the invention has a feature in which a filtrate after hemolysis and deproteinization treatment are directly supplied to a solid phase extracting agent without temporary collection thereby performing an adsorption treatment of the aimed component to the solid phase extracting agent (process flow 103).

A pretreatment apparatus used in the sample pretreatment method of Example 1 according to the invention has a filter device and a column as a solid phase extraction device formed integrally. Therefore, in the pretreatment apparatus (solid phase extraction cartridge), conditioning identical with the conditioning in the process flow 102 is at first performed and then a process from dispensing of a whole blood specimen to filtration (filtration by application of pressure) is performed in the same manner as in the process flow 101, and a process in which addition of the internal standard substance, addition of an eluate and application of pressure is performed in the same manner as in the process flow 102 to extract a solid phase.

In this case, it is necessary that the composition of the filtrate conforms to the adsorption condition of the aimed component to the solid phase extracting agent.

For explaining this specifically, solubility of immunosuppressants to methanol is to be described as an example.

For example, immunosuppressant such as tacrolimus, sirolimus (Rapamycin), Everolimus, or cyclosporine has high hydrophobicity and has a nature less soluble to an aqueous solution. When the solubility of the drug to methanol is investigated, a trend is observed that the drug is not stably dissolved unless methanol at 50% or higher is present.

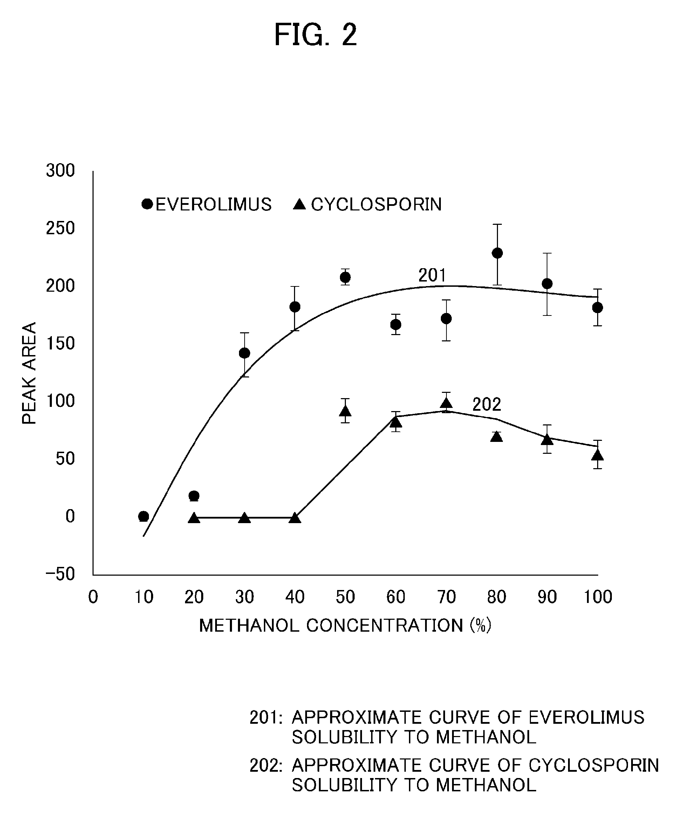

As an example, Fig. 2 shows data for Evelorimus (201) and cyclosporine (202). This shows that when such drugs are target for extraction, it is necessary to take notice on a final concentration of an organic solvent upon deproteinization treatment and supply of the sample to the solid phase extracting agent and it is preferably at least 50% or higher in the use of methanol.

For a drug having high hydrophobicity such as the immunosuppressant described above, not only the aggregates can be formed due to protein denaturation but also the immunosuppressant taken out of blood cells by hemolysis treatment can be dissolved into supernatants and can be adsorbed as it is to the solid phase extracting agent by setting the final concentration of methanol to 50%. Thus, the filtrate obtained by the deproteinization treatment can be supplied directly to the solid phase extracting agent.

On the other hand, for a drug having high hydrophilicity, the aimed component cannot be adsorbed even when the filtrate is supplied directly to the solid phase extracting agent at the final concentration of methanol of 50% upon deprotenization. In this case, the aimed component can be adsorbed to the solid phase extracting agent by adding a necessary amount of H₂O, etc. to the liquid suspension of aggregates after protein denaturation to lower the concentration of methanol and then performing filtration and supplying the filtrate directly to the solid phase extracting agent.

In each of the examples to be described later, a method of adsorbing the aimed component by directly supplying the filtrate upon deproteinization to the solid extracting agent without temporary collection is applicable to any of the constitutions of the apparatus.

When a whole blood specimen of a patient is not available as a specimen for evaluation, a pseudo whole blood specimen of a patient can be prepared and used. The pseudo whole blood specimen of the patient can be prepared by adding an immunosuppressant standard product dissolved, for example, in 50% methanol to a whole blood specimen taken from a healthy person such that the final concentration of the immunosuppressant standard product is within about a therapeutical range of concentration of each immunosuppressant. Further, by incubating the prepared pseudo whole blood specimen of the patient for 30 minutes while mixing by tumbling moderately at 37°C, blood cell penetration of each immunosuppressant can be reproduced.

As described above, since Example 1 of the invention is configured such that the filtrate after the reaction treatment processing is subjected to the whole blood treatment and the solid extraction treatment collectively without primary collection of the filtrate, loss of a biological sample and contamination with other biological samples, etc. occurring upon primary collection can be suppressed.

Further, vessels, chips, etc. for primary collection are not necessary and the cost and cleaning therefor, etc. can be saved.

### Example 2

A biological sample pretreatment apparatus as Example 2 of the invention is to be described. Example 2 has a suspension type apparatus configuration.

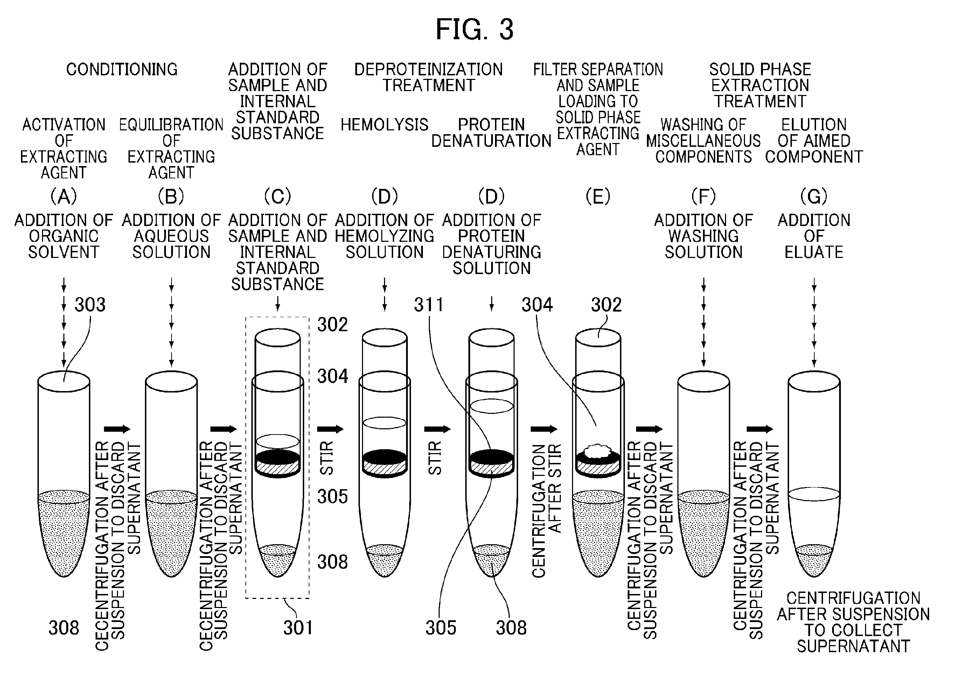

Fig. 3 is an explanatory view of a suspension type sample pretreatment apparatus as Example 2 of the invention.

As shown in Fig. 3(C), a sample pretreatment apparatus 301 has a feature that a filter device 302 is inserted into a solid phase extraction device 303 and integrated therewith.

In the sample pretreatment apparatus 301, the filter device 302 is disposed at the upstream and the solid phase extraction device 303 is disposed at the downstream, and a filtrate from the filter device 302 is directly supplied to the solid phase extraction device 303 without temporary collection.

The filter device 302 comprises a filter reservoir 304 and a filter unit 305. Further, the solid phase extraction device 303 is cup-shaped and used with addition of a solid phase extracting agent 308.

The material for the filter reservoir 304 of the filter device 302 is not particularly restricted and resins, metals, etc. used generally, for example, in the pretreatment of biological samples, etc. may be used. However, it is preferred to have a capacity at least 8 times or more the amount of a sample to be supplied in order to accommodate the volume of reagents to be added.

This is attributable to the fact that when 50 µL of a whole blood is used as a sample, for example, for the extraction of an immunosuppressant, since the volume of a zinc sulfate solution used for hemolysis treatment is 150 µL and the volume of methanol used for deproteinization treatment is 200 µL, the total amount of a reaction solution is 400 µL, which corresponds to an amount 8 times the amount of the sample.

Further, the material for the filter unit 305 of the filter device 302 is not restricted so long as the material has a filtration function, and materials used generally, for example, in the pretreatment of biological samples, etc. may be used. The amount of aggregates formed by the reaction in the filter device 302 greatly depends on the kind, origin, amount, etc. of a specimen and the area of the upstream bottom 311 of the filter unit is preferably as large as possible in order to avoid clogging in the filter unit 305. Further, the pore size of the filter unit 305 is preferably 2.0 µmφ or less in order to capture fine miscellaneous components in the biological sample.

The material for the solid extraction device 303 is not restricted and resins, metals, etc. used generally, for example, in the pretreatment of biological samples, etc. may be used. However, it is preferred to have a capacity at least equal with or more than the amount of deproteinized sample to be supplied so as to accommodate the volume of the reagents to be added.

Further, as the solid extracting agent 308 filled in the solid extraction device 303, those having a performance suitable to extraction of a target component are used. For example, beads of silica gel, polymer, resin, etc. can be used.

An operation method when a sample is prepared by using the sample pretreatment apparatus 301 is to be shown below.

Respective reagents used for conditioning the solid phase extracting agent 308, adsorption of an aimed component, removal of miscellaneous components, and elution and collection of the aimed component are selected properly according to the characteristic of the solid phase extracting agent 308. For the sake of convenience, an example in a case where a solid phase extracting agent 308 is used in a reversed phase mode is shown in this example.

In Fig. 3(A) and (B), a solid phase extracting agent 308 is added by a necessary amount to a cup-shaped solid phase extraction device 303 and conditioning thereof is performed at first. At first, for activating functional groups of the solid phase extracting agent 308, an organic solvent, for example, methanol, is added, stirred sufficiently and centrifuged, and then supernatants are discarded (Fig. 3(A)).

Then, for equilibration of the solid phase extracting agent 308, an aqueous solution, for example, a buffer is added, sufficiently stirred and then centrifuged, and the supernatants are discarded (Fig. 3(B)).

By the operation described above, conditioning for the solid phase extracting agent 308 is completed.

Then, as shown in Fig. 3(C), a filter device 302 is attached to the opening of the solid phase extraction device 303 and a sample is added to the inside of a filter reservoir 304. In this case, when the extraction component is measured, for example, by mass analysis, an internal standard substance is also added and stirred sufficiently.

Then, as shown in Fig. 3(D), when the sample is a whole blood and it is necessary to take-out intra-cell components, a necessary amount of hemolyzing solution is added and stirred sufficiently thereby disrupting blood cells.

Then as shown in Fig. 3(E), a necessary amount of protein denaturing solution is added and stirred sufficiently. Thus, the protein sample is denatured to form aggregates.

Then, as shown in Fig. 3(F), the sample pretreatment device 303 is subjected to centrifugation and aggregates are left on the side of the filter device 302 and the filtrate is supplied as it is to the solid phase extracting agent by way of a filter unit 305 such as a glass filter or resin filter without collection. By the operation, an aimed component is adsorbed to the solid phase extracting agent 308.

Then, the filter device 302 is discarded, the solid phase extracting agent 308 in the solid phase extraction device 303 is sufficiently stirred, and after centrifuged, supernatants are discarded. By the operation, miscellaneous components not absorbed to the solid extracting agent 308 are removed.

Then, as shown in Fig. 3(G), a necessary amount of washing solution is added to the inside of the solid phase extraction device 303, after sufficiently stirred and then centrifuged, the supernatants are discarded. By the operation, miscellaneous components adsorbed non-specifically to the solid phase extracting agent 308 are removed.

Then, as shown in Fig. 3(H), a necessary amount of an eluate is added to the inside of the solid phase extraction device 303, after sufficiently stirred and then centrifuged, supernatants are discarded. By the operation, the aimed component specifically adsorbed to the solid phase extracting agent 308 is eluted and collected.

For example, when the solid phase extracting agent 308 is a magnetic body, the solid phase extracting agent 308 and the supernatant may be separated not by the centrifugation described above but by bringing a magnet or the like closer to the surface of the solid phase extraction device 303.

As described above, according to Example 2 of the invention, since the whole blood treatment and the solid phase extraction treatment are performed collectively without primarily collecting the filtrate after the reaction treatment, the reaction treatment can be performed with a simple configuration, and loss of the sample, contamination with other samples, etc. generated upon primary collection can be prevented.

Further, vessels, chips, etc. for primary collection are not necessary and the cost, washing process, therefore, etc. can be saved.

### Example 3

Then, a sample pretreatment apparatus as Example 3 of the present invention is to be described. Example 2 has a syringe type (not detachable) apparatus configuration.

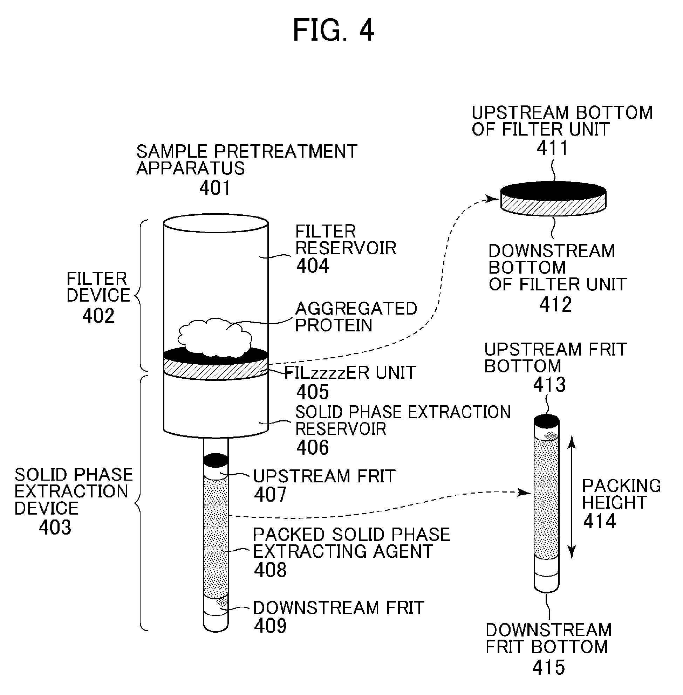

Fig. 4 is a view showing a structure of a syringe type (not detachable) sample pretreatment apparatus (sample pretreatment apparatus) 401 as Example 3 of the invention.

In Fig. 4, the sample pretreatment apparatus 401 has a not-detachable structure in which filter device 402 and a solid phase extraction device 403 cannot be separated from each other.

In the sample pretreatment apparatus 401, the filter device 402 is disposed at the upstream and the solid phase extraction device 403 is disposed at the downstream, in which a filtrate from the filter device 402 is directly supplied to the solid phase extraction device 403 without temporary collection.

The filter device 402 comprises a filter reservoir 404 and a filter unit 405. The solid phase extraction device 403 comprises a solid phase extraction reservoir 406, a solid phase extracting agent 408, and an upstream frit 407 and a downstream frit 409 for holding the solid phase extracting agent 408 in the solid phase extraction device 403.

The material for the filter reservoir 404 in the filter device 402 is not particularly restricted and resins, metals, etc. used generally, for example, in the pretreatment of biological samples may be used. However, it is preferred to have a capacity of at least 8 times or more the amount of a sample to be supplied in order to accommodate the volume of reagents to be added.

This is attributable to the fact that when 50 µL of a whole blood is used as a sample for extraction of an immunosuppressant, since the volume of a zinc sulfate solution used for hemolysis treatment is 150 µL and the volume of methanol used for deproteinization treatment is 200 µL, the total amount of a reaction solution is 400 µL, which corresponds to an amount 8 times the sample amount.

Further, the material for the filter unit 405 of the filter device 402 is not restricted so long as the material has a filtration function, and materials used generally, for example, in the pretreatment of biological samples, etc., may be used. The amount of aggregates formed by the reaction in the filter device 402 greatly depends on the kind, origin, amount, etc. of a specimen, and the area of the upstream bottom 411 of the filter unit is preferably larger than the area of the upstream frit bottom 413 of the solid extraction device 403 in order to avoid clogging in the filter unit 405.

Further, the pore size of the filter unit 405 is preferably 2.0 µmφ or less in order to capture miscellaneous fine components in the biological sample.

The material for the solid phase extraction reservoir 406 of the solid phase extraction device 403 is not restricted and resins, metals, etc. used generally, for example, in the pretreatment of biological samples may be used. However, it is preferred to have a capacity equal with or more than the amount of deproteinized sample to be supplied so as to accommodate the volume of the reagents to be added.

Further, the structure of a part filled with the solid phase extracting agent 408 in the solid phase extraction device 403 greatly depends on the performance and the specification of the solid phase extracting agent 408 to be filled and it is preferred to have a packing height 414 equal with or larger than the diameter at the upstream frit bottom 413 in order to keep the extraction efficiency of micro amount of components in a micro volume sample. However, it is not always necessary that the size of the upstream frit bottom 413 and that of the downstream frit bottom 415 are identical to each other and the shape of filling the solid phase extracting agent 408 may be, for example, a fine tubular shape (cylindrical shape) or a conical shape. Further, as the solid phase extracting agent 408 to be filled, those having a performance suitable to the extraction of the target component are used.

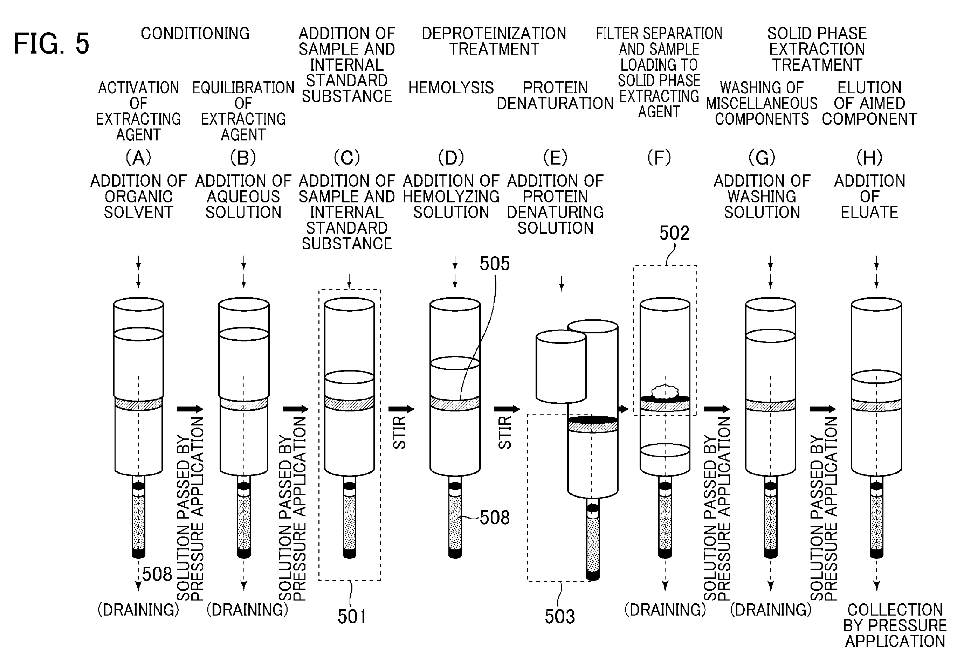

Fig. 5 is an explanatory view for an operation method when a sample is prepared by using the sample pretreatment apparatus 401.

Respective reagents used for conditioning the solid phase extracting agent 508, adsorption of an aimed component, removal of miscellaneous components, and elution and collection of the aimed component are selected properly according to the characteristic of the solid phase extracting agent 508. For the sake of convenience, an example in a case where a solid phase extracting agent 508 is used in a reversed phase mode is shown in this example.

In Fig. 5(A), an organic solvent, for example, methanol is at first added to the filter device 502, pressurized, and passed by way of the filter unit 505 to the solid extracting agent 508 by pressurization to the opening of the upper end or suction from the opening at the lower end of the sample pretreatment apparatus 501, and a liquid discharged from the lower end of the solid phase extraction device 503 is discarded. By the operation, functional groups of the solid phase extracting agent 508 are activated.

Then, in Fig. 5(B), an aqueous solution, for example, a buffer is added to the filter device 502, pressurized, and supplied by way of the filter unit 505 to the solid phase extracting agent 508 by pressurization to the opening at the upper end or suction from the opening at the lower end of the sample pretreatment apparatus 501, and the liquid discharged from the lower end of the solid phase extraction device 503 is discarded. By equilibrating the activated solid phase extracting agent 508 by the operation, the conditioning for the solid phase extracting agent 508 is completed.

Then, as shown in Fig. 5(C), a sample is added to the filter device 502. In this case, when the extraction component is measured, for example, by mass analysis, an internal standard substance is also added and sufficiently stirred.

Then, as shown in Fig. 5(D), when the sample is a whole blood and it is necessary to take-out intra-cell components, a necessary amount of a hemolyzing solution is added and sufficiently stirred thereby disrupting blood cells.

Then as shown in Fig. 5(E), a necessary amount of a protein denaturing solution is added to the filter device 502 and sufficiently stirred. Thus, the protein sample is denatured to form aggregates.

Then, as shown in Fig. 5(F) a pressure is applied to the sample pretreatment apparatus 501, aggregates are left on the side of the filter device 502 and the filtrate is supplied as it is by way of the filter unit 505 to the solid phase extracting agent 508 without collection of the filtrate by pressurization to the opening at the upper end or suction from the opening at the lower end of the sample pretreatment apparatus 501. The liquid discharged from the lower end of the solid phase extraction device 503 is discarded. By the operation, the aimed component is adsorbed to the solid phase extracting agent 508, and miscellaneous components not absorbed to the solid phase extracting agent 508 are removed.

Then, as shown in Fig. 5(G), a necessary amount of a washing solution is added to the inside of the filter device 502, a pressure is applied to the sample pretreatment device 501, and the solution is supplied by way of the filter unit 505 to the solid phase extracting agent 508 by pressurization to the opening at the upper end or suction from the opening at the lower end opening of the sample pretreatment device 501, and the solution discharged from the lower end of the solid phase extraction device 503 is discarded. By the operation, miscellaneous components adsorbed non-specifically to the solid phase extracting agent 508 are removed.

Then, as shown in Fig. 5(H), a necessary amount of an eluate is added to the inside of the filter device 502, a pressure is applied to the sample pretreatment device 501, and the liquid is passed by way of the filter unit 505 to the solid phase extracting agent 508 by pressurization to the opening at the upper end or suction from the opening at the lower end of the sample pretreatment device 501, and the liquid discharged from the lower end of the solid phase extraction device 503 is eluted and collected. By the operation, an aimed component adsorbed specifically to the solid phase extracting agent 508 is eluted and collected.

Also in Example 3 of the invention, the same effect as that of Example 2 can be obtained.

### Example 4

Then, a sample pretreatment apparatus as Example 4 of the invention is to be described. Example 4 has a syringe type (detachable) apparatus configuration.

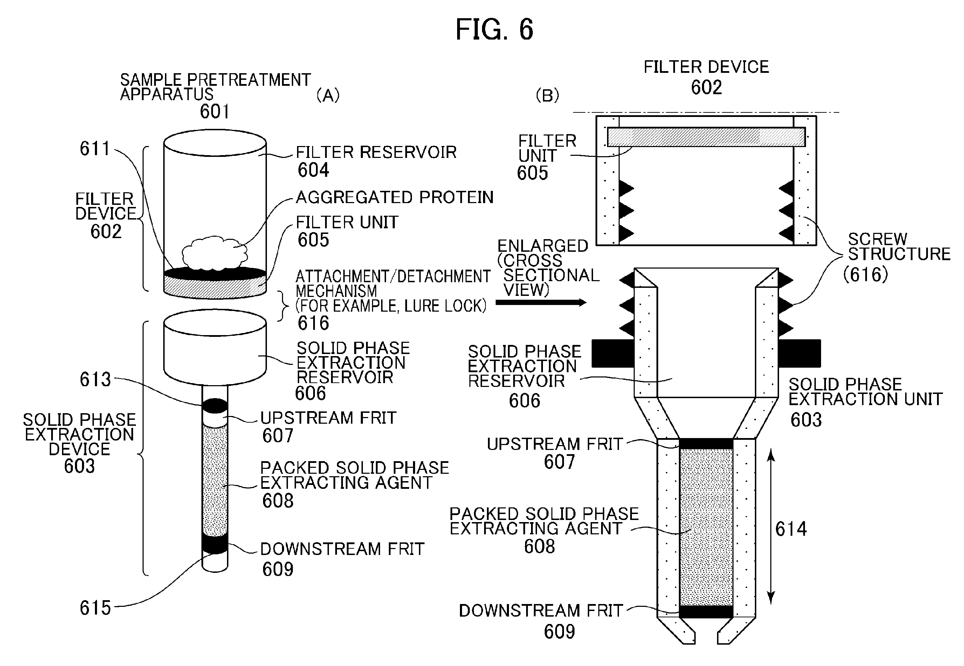

Fig. 6 is an explanatory view of a sample pretreatment apparatus (apparatus) 601. Fig. 6(A) shows a schematic configuration and Fig. 6(B) shows a schematic cross section of the sample pretreatment apparatus 601.

The structure of the sample pretreatment apparatus 601 in which a filter device 602 and a solid phase extraction device 603 are connected in a detachable structure, for example, a Luer-lock type connection mechanism 616 is to be described.

In Fig. 6, in the sample pretreatment apparatus 601 of the invention, the filter device 602 is disposed at the upstream and the solid extraction device 603 is disposed at the downstream, and a filtrate from the filter device 602 is directly supplied to the solid phase extraction device 603 without temporary collection.

The filter device 602 comprises a filter reservoir 604 and a filter unit 605. Further, the solid phase extraction device 603 has a solid phase extraction reservoir 606, a solid phase extracting agent 608, and an upstream frit 607 and a downstream frit 609 for holding the solid phase extracting agent 608 in the inside of the solid phase extraction device 603.

The material for the filter reservoir 604 of the filter device 602 is not particularly restricted and resins, metals, etc. used generally, for example, in the pretreatment of biological samples, etc. may be used. However, it is preferred to have a capacity at least 8 times the amount of a sample to be supplied in order to accommodate the volume of reagents to be added.

This is attributable to the fact that when 50 µL of a whole blood is used as a sample, for example, for the extraction of an immunosuppressant, since the volume of a zinc sulfate solution used for hemolysis treatment is 150 µL and the volume of methanol used for deproteinization treatment is 200 µL, the total amount of a reaction solution is 400 µL, which corresponds to an amount 8 times the amount of the sample.

Further, the material for the filter unit 605 of the filter device 602 is not restricted so long as the material has a filtration function and materials used generally, for example, in the pretreatment of biological samples, etc. may be used. The amount of aggregates formed by the reaction in the filter device 602 greatly depends on the kind, origin, amount, etc. of a specimen, and it is preferred that the area of the upstream bottom 611 of the filter unit be larger than the area of the upstream frit bottom 613 of the solid phase extraction device 603 in order to avoid clogging in the filter unit 605.

The material for the solid phase extraction reservoir 606 of the solid phase extraction device 603 is not restricted and resins, metals, etc. used generally, for example, in the pretreatment of biological samples may be used. However, for accommodating the volume of the reagents to be added, it is preferred to have a capacity equal with or more than the amount of deproteinized sample to be supplied.

Further, the structure of a part for packing the solid phase extracting agent 608 in a solid phase extraction device 603 greatly depends on the performance and the specification of the solid phase extracting agent 608 to be filled and it is preferred to have a packing height 614 equal with or larger than the diameter at the upstream frit bottom 613 in order to keep the extraction efficiency of the micro amount component in the micro volume sample. However, it is not always necessary that the size of the upstream frit bottom 613 and that of the downstream frit bottom 615 are identical with each other and the shape of the filled solid phase extracting agent 608 may be, for example, a fine tubular shape (cylindrical shape) or a conical shape. Further, the solid phase extracting agent 608 to be filled having performance suitable to extraction of the target component is used.

A Luer-lock type screw-like structure 616 is provided to the lower end region of the filter device 602 and to the upper end region of the solid phase extraction device 603 for attachment and detachment between both of the devices. Alternatively, it is also possible to use a connection structure in which the filter device 602 can be inserted into the upper portion of the solid phase extraction reservoir 606, or the solid phase extraction device 603 can be inserted into the lower portion of the filter device 602.

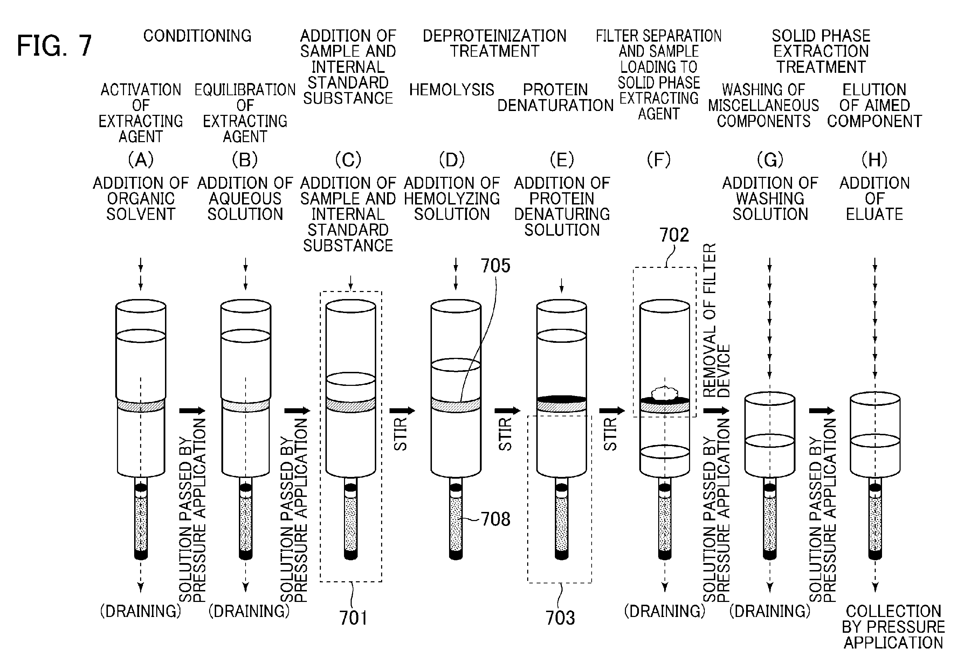

An operation method when a sample is prepared by using the sample pretreatment apparatus 601 is to be described with reference to Fig. 7.

Respective reagents used for conditioning the solid phase extracting agent 708, adsorption of an aimed component, removal of miscellaneous components, and elution and collection of the aimed component are selected properly according to the characteristic of the solid phase extracting agent 708. For the sake of convenience, an example in a case where a solid phase extracting agent 708 is used in a reversed phase mode is shown in this example.

As shown in Fig. 7(A), an organic solvent, for example, methanol is added at first to the filter device 702, a pressure is applied, and a solution is supplied by way of the filter unit 705 to the solid extracting agent 708 by the pressurization to the opening at the upper end or the suction from the opening at the lower end of the sample pretreatment apparatus 701, and a solution discharged from the lower end of the solid phase extraction device 703 is discarded. By the operation, functional groups of the solid phase extracting agent 708 are activated.

Then, as shown in Fig. 7(B), an aqueous solution, for example, a buffer is added to the filter device 702, a pressure is applied, and the solution is passed by way of the filter unit 705 to the solid phase extracting agent 708 by pressurization to the opening at the end opening or suction from the opening at the lower end of the sample pretreatment apparatus 701, and a solution discharged from the lower end of the solid phase extraction device 703 is discarded. By equilibrating the activated solid phase extracting agent 708 by the operation, the conditioning for the solid phase extracting agent 708 is completed.

Then, as shown in Fig. 7(C), a sample is added to the filter device 702. In this step, when the extraction component is measured, for example, by mass analysis, an internal standard substance is also added and stirred sufficiently.

Then, as shown in Fig. 7(D), when the sample is a whole blood and it is necessary to take-out intra-cell components, a necessary amount of a hemolyzing solution is added and stirred sufficiently thereby disrupting blood cells.

Then as shown in Fig. 7(E), a necessary amount of a protein denaturing solution is added to the filter device 702 and stirred sufficiently. By the operation, the protein in the sample is denatured to form aggregates.
Then, as shown in Fig. 7(F) a pressure is applied to the sample pretreatment apparatus 701 and aggregates are left on the side of the filter device 702 and the filtrate is supplied as it is by way of the filter unit 705 to the solid phase extracting agent 708 without collection of the filtrate by pressurization to the opening at the upper end or suction from the opening at the lower end of the sample pretreatment apparatus 701. A solution discharged from the lower end of the solid phase extraction device 703 is discarded. By the operation, the aimed component is adsorbed to the solid phase extracting agent 708, and miscellaneous components not absorbed to the solid phase extracting agent 708 are removed.

Then, the filter device (702) is detached from the solid phase extraction device (703) and the filter device (702) is discarded.

Then, as shown in Fig. 7(G), a necessary amount of a washing solution is added to the inside of the solid phase extraction device 703 and a pressure is applied to the sample pretreatment device 701, so that the solution is passed to the solid phase extracting agent 708 by pressurization to the opening at the upper end or suction from the opening at the lower end of the sample pretreatment device 701, and a solution discharged from the lower end of the solid phase extraction device 703 is discarded. By the operation, miscellaneous components adsorbed non-specifically to the solid phase extracting agent 708 are removed.

Then, as shown in Fig. 7(H), a necessary amount of an eluate is added to the inside of the solid phase extraction device 703, a pressure is applied to the sample pretreatment device 701, and the solution is passed to the solid phase extracting agent 708 by pressurization to the opening at the upper end or suction from the opening at the lower end of the sample pretreatment device 701, and a solution discharged from the lower end of the solid phase extraction device 703 is collected. By the operation, the aimed component adsorbed specifically to the solid phase extracting agent 708 is eluted and collected.

Also in Example 4 of the invention, the same effect as that of Example 2 can be obtained.

### Example 5

Then, a sample pretreatment apparatus as Example 5 of the invention is to be described. Example 4 has a syringe type (used also as frit) apparatus configuration.

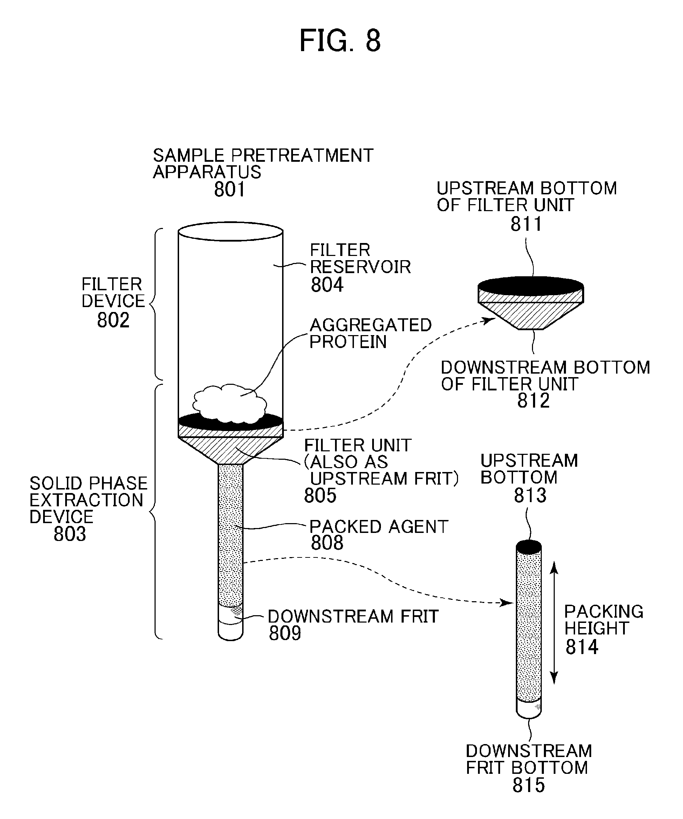

Fig. 8 is an explanatory view of a sample pretreatment apparatus (apparatus) 801 as Example 5 of the invention.

A sample pretreatment apparatus 801 having a structure in which a filter device 802 and a solid phase extraction device 803 are connected, and a filter unit 805 is used also as an upstream frit that holds a solid phase extracting agent 808 is to be described. Since the Example 5 of the invention has a structure that the filter device 802 and the solid phase extraction device 803 are not detached from each other, it has no function of attaching and detaching both of the devices.

In Fig. 8, the filter device 802 is disposed at the upstream and the solid extraction device 803 is disposed at the downstream in the sample pretreatment apparatus 801, and a filtrate from the filter device 802 can be supplied directly to the solid phase extraction device 803 without temporary collection.

Specifically, the filter device 802 has a filter reservoir 804 and a filter unit 805. Further, the solid phase extraction device 803 has no solid phase extraction reservoir but comprises a solid phase extracting agent 808 and a downstream frit 809 for holding the solid phase extracting agent 808 in the inside of the solid phase extraction device 803, and the upstream frit which is substituted by the filter unit 805 as described above.

The material for the filter reservoir 804 of the filter device 802 is not particularly restricted and resins, metals, etc. used generally, for example, in the pretreatment of biological samples, etc. may be used. However, it is preferred to have a capacity at least 8 times or more the amount of a sample to be supplied so as to accommodate the volume of reagents to be added.

This is attributable to the fact that when 50 µL of a whole blood is used as a sample, for example, for the extraction of an immunosuppressant, since the volume of a zinc sulfate solution used for hemolysis treatment is 150 µL and the volume of methanol used for deproteinization treatment is 200 µL, the total amount of a reaction solution is 400 µL, which corresponds to an amount 8 times the amount of the sample.

Further, the material for the filter unit 805 of the filter device 802 is not restricted so long as the material has a filtration function and materials used generally, for example, in the pretreatment of biological samples, etc., may be used. The amount of aggregates formed by the reaction in the filter device 802 greatly depends on the kind, origin, amount, etc. of a specimen, and it is preferred that the area of the upstream bottom 811 of the filter unit be larger than that of the upstream bottom 813 of the solid phase extracting agent 808 in order to avoid clogging in the filter unit 805. Accordingly, it is preferred that the size be different between the upstream bottom 811 of the filter unit and the downstream bottom 812 of the filter unit of the filter unit 805, and the downstream bottom 812 of the filter unit cover the upstream bottom 813 of the solid extracting agent 803. Further, the pore size of the filter unit 805 is preferably 2.0 µmφ or less in order to capture miscellaneous fine components in the biological sample.

Further, the material for the solid phase extraction device 803 is not restricted and resins, metals, etc. used generally, for example, in the pretreatment of biological samples may be used.

Further, the structure of a part filled with the solid phase extracting agent 808 in a solid phase extraction device 803 greatly depends on the performance and the specification of the solid phase extracting agent 808 to be filled and it is preferred to have a packing height 814 equal with or larger than the diameter at the upstream frit bottom 813 of the solid phase extracting agent 808 in order to keep the extraction efficiency of the micro amount component in the micro volume sample. However, it is not always necessary that the size is identical between the area of the upstream frit bottom 813 and that of the downstream frit bottom 815 and the shape of filling the solid phase extracting agent 808 may be, for example, a fine tubular shape (cylindrical shape) or a conical shape. Further, a solid phase extracting agent 808 to be filled having a performance suitable to extraction of a target component is used.

The operation method when the sample is prepared by using the sample pretreatment apparatus 801 is identical with that of Example 3.

Also in Example 5 of the invention, the same effect as that of Example 2 can be obtained.

### Example 6

Then, a sample pretreatment apparatus as Example 6 of the invention is to be described. Example 6 has a syringe type (prepack) apparatus configuration.

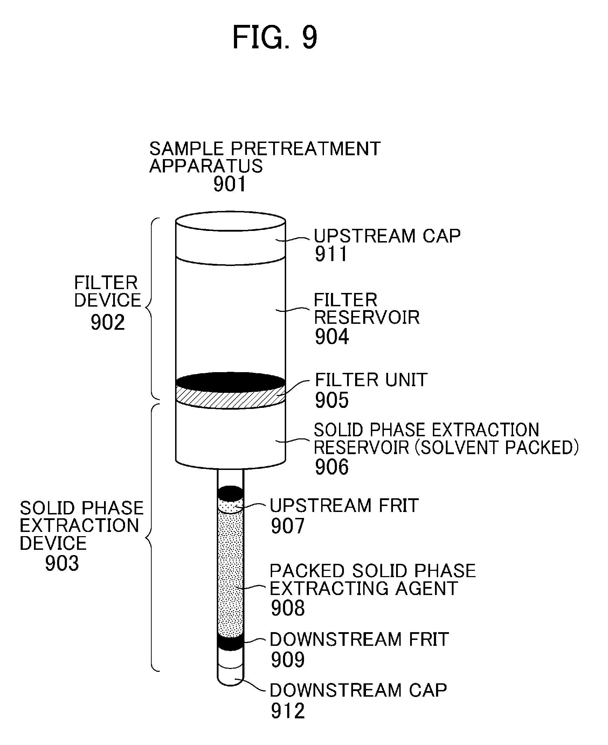

Fig. 9 is an explanatory view of a sample pretreatment apparatus (apparatus) 901 as Example 6 of the invention.

This is a sample pretreatment apparatus 901, in which a filter device 902 and a solid phase extraction device 903 are connected, and a solid phase extracting agent 908 is in a previously conditioned state. Further, this is also a sample pretreatment apparatus 901 used exclusively for an aimed component in which an internal standard substance for measurement of the aimed component is added to a conditioned solid phase extracting agent 908 packed in the sample pretreatment apparatus 901.

The structure and the feature of the sample pretreatment apparatus 901 are identical with those shown in Examples 1 to 3 described above. Since the solid phase extracting agent 908 has been conditioned, the periphery of the solid phase extracting agent 908 is filled with a solution used for equilibration and the openings at the upper end and the lower end of the sample pretreatment apparatus 901 are tightly sealed by caps 911 and 912.

Further, in the sample pretreatment apparatus 901 used exclusively for measurement of the aimed component, a necessary amount of an internal standard substance for measurement of the aimed component is added to a slurry of the conditioned solid phase extracting agent 908 to be packed in the sample pretreatment apparatus 901, sufficiently suspended, and then packed in the sample pretreatment apparatus 901, and the periphery thereof is filled with an equilibrating solution, and the openings at the upper end and the lower end of the sample treatment apparatus 901 are tightly sealed by the caps 911 and 912.

Alternatively, it may be configured such that a necessary amount of the internal standard substance for measurement of the aimed component is added to the conditioned solid phase extracting agent 908 packed in the sample pretreatment apparatus 901, or to the equilibrating solution filling the periphery thereof after the packing. Then, the openings at the upper end and the lower end of the sample pretreatment apparatus 901 are tightly sealed by the caps 911 and 912.

An operation method when a sample is prepared by using the sample pretreatment apparatus 901 is to be shown below.

Respective reagents used for conditioning the solid phase extracting agent 908, adsorption of an aimed component, removal of miscellaneous components, and elution and collection of the aimed component are selected properly according to the characteristic of the solid phase extracting agent 908. For the sake of convenience, an example in a case where a solid phase extracting agent 908 in a reversed phase mode is used is shown in this example.

At first, the caps 911 and the 912 tightly sealing the upper end and the lower end of the sample pretreatment apparatus 901 are detached.

Then, an equilibrating solution wetting the solid phase extracting agent 908 is passed by application of pressure, etc. to the sample pretreatment apparatus 901 to attain a state in which the necessary amount of the internal standard substance is adsorbed to the solid phase extracting agent 908. Then, a sample is added to the filter device 902.
When the sample is a whole blood, a necessary amount of a hemolyzing solution is added to the filter device 902 and sufficiently stirred with the sample.

Then, a necessary amount of a protein denaturing solution is added to the filter device 902 and sufficiently stirred with the sample.

Then, the sample inside the filter device 902 is filtered through a filter unit 905 by application of pressure, etc. to the sample pretreatment apparatus 901 and the filtrate is directly supplied and passed to the solid phase extracting agent 908 by way of the filter unit 905 without collection of the obtained filtrate thereby adsorbing the aimed component to the solid phase extracting agent 908.

Then, a necessary amount of a washing solution is added to the sample pretreatment apparatus 901.

Then, by passing the washing solution through the solid phase extracting agent 908 by application of pressure, etc. to the sample pretreatment apparatus 901, miscellaneous components adsorbed non-specifically to the solid phase extracting agent 908 are removed.

Then, a necessary amount of an eluate is added to the sample pretreatment apparatus 901.

Then, the eluate is passed through the solid phase extracting agent 908 by application of pressure, etc. to the sample pretreatment apparatus 901 thereby eluting and collecting the aimed component specifically adsorbed to the solid phase extracting agent 908.

In the case of the slurry described above, a corrosion inhibitor such as sodium azide may be provided by addition.

Also in Example 6 of the invention, the same effect as that of Example 2 can be obtained.

### Example 7

Then, a sample pretreatment apparatus as Example 7 of the invention is to be described. Example 7 has a chip type apparatus configuration.

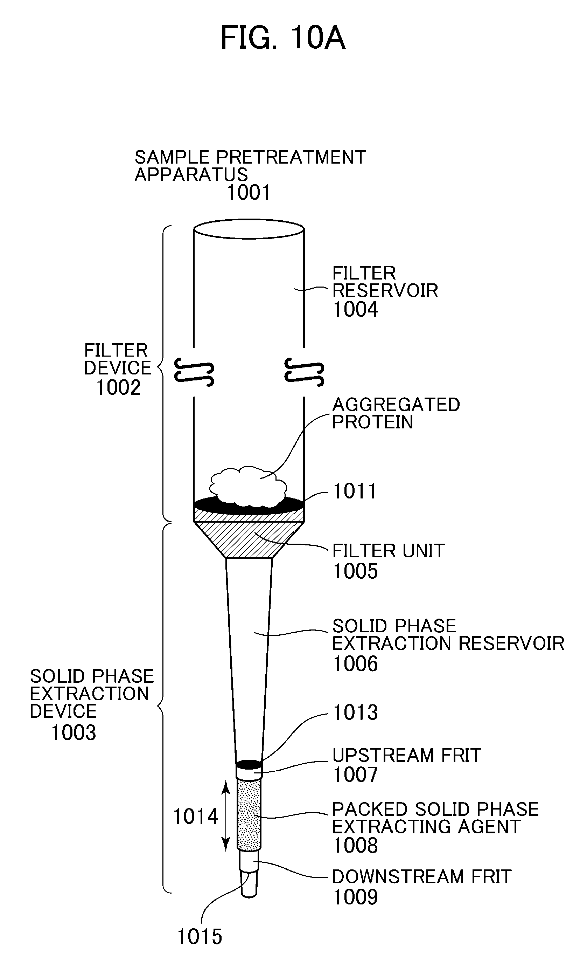

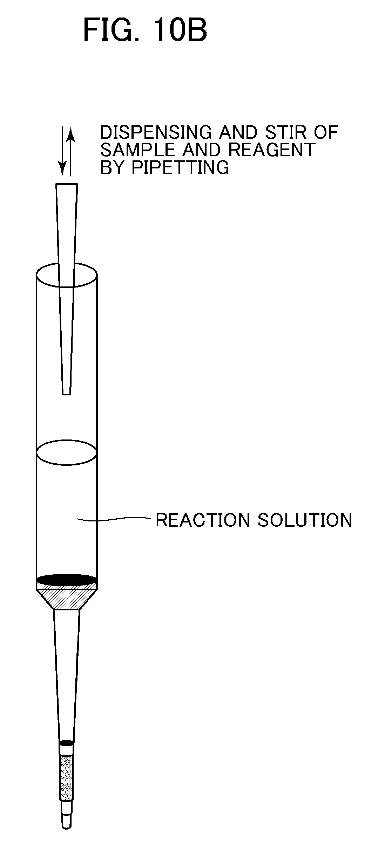

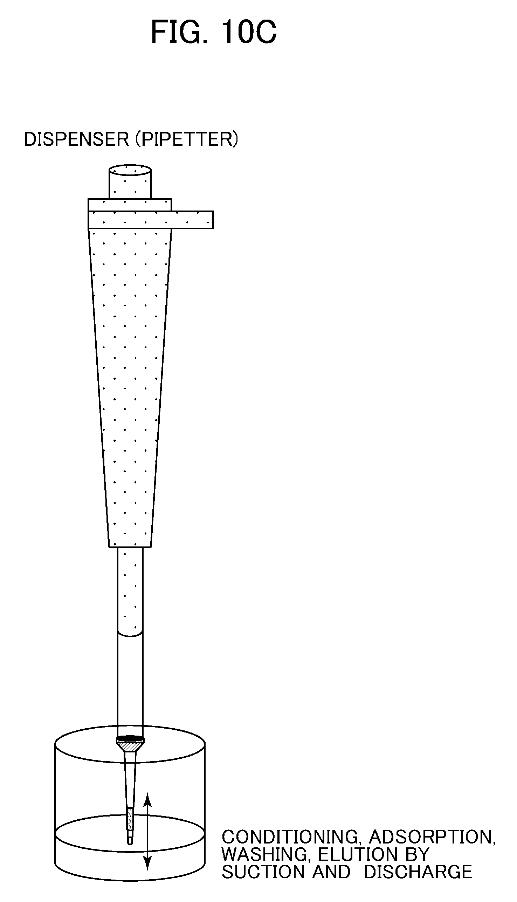

Fig. 10A, Fig. 10B, and Fig. 10C are explanatory views for sample pretreatment apparatus (apparatus) 1001 as Example 7 of the invention. Fig. 10A shows a configuration of a sample pretreatment apparatus 1001, Fig. 10B explains pipetting and stirring of a sample and reagents, and Fig. 10C shows conditioning, adsorption, washing, and elution by suction/discharge.

This is a sample pretreatment apparatus 1001, in which a filter device 1002 and a solid phase extraction device 1003 are connected in a not-detachable manner that cannot be detached from each other, where a dispenser (pipetter) can be attached to the opening at the upper end of the filter device 1002.

In the sample pretreatment apparatus 1001, the filter device 1002 is disposed on the upstream side and the solid phase extraction device 1003 is disposed at the downstream side, wherein a filtrate from the filter device 1002 is supplied directly to the solid phase extraction apparatus 1003 without temporary collection.

The filter device 1002 has a filter reservoir 1004 and a filter unit 1005. Further, the solid phase extraction device 1003 has a solid phase extraction reservoir 1006, a solid phase extracting agent 1008, and an upstream frit 1007 and a downstream frit 1009 for holding the solid phase extracting agent 1008 inside the solid phase extraction device 1003.

The material for the filter reservoir 1004 of the filter device 1002 is not particularly restricted and resins, metals, etc. used generally, for example, in the pretreatment of biological samples, etc. may be used. However, it is preferred to have a capacity at least 8 times or more the amount of a sample to be supplied so as to accommodate the volume of reagents to be added.

This is attributable to the fact that when 50 µL of a whole blood is used as a sample, for example, for the extraction of an immunosuppressant, since the volume of a zinc sulfate solution used for hemolysis treatment is 150 µL and the volume of methanol used for deproteinization treatment is 200 µL, the total amount of a reaction solution is 400 µL, which corresponds to an amount 8 times as large as the amount of the sample.

Further, the material for the filter unit 1005 of the filter device 1102 is not restricted so long as the material has a filtration function and materials used generally, for example, in the pretreatment of biological samples, etc., may be used. The amount of aggregates formed by the reaction in the filter device 1002 greatly depends on the kind, origin, amount, etc. of a specimen, and it is preferred that the area of the upstream bottom 1011 of the filter unit be larger than that of the upstream frit bottom 1013 of the solid phase extraction device 1003 in order to avoid clogging of the filter unit 1005. Further, the pore size of the filter unit 1005 is preferably 2.0 µmφ or less in order to capture miscellaneous fine components in the biological sample.

The material for the solid phase extraction reservoir 1006 of the solid phase extraction device 1003 is not restricted and resins, metals, etc. used generally, for example, in the pretreatment of biological samples may be used. However, for accommodating the volume of the reagents to be added, it is preferred to have a capacity at least equal with or more than the amount of deproteinized sample to be supplied.

Further, the structure of a part for packing the solid phase extracting agent 1008 in a solid phase extraction device 1003 greatly depends on the performance and the specification of the solid phase extracting agent 1008 to be packed and it is preferred to have a packing height 1014 equal with or larger than the diameter of the upstream frit bottom 1013 in order to keep the extraction efficiency of a micro amount component in a micro volume sample. However, it is not always necessary that the size of the area of the upstream frit bottom 1013 and that of the downstream frit bottom 1015 are identical with each other and the shape of the packed solid phase extracting agent 1008 may be, for example, a fine tubular shape (cylindrical shape) or a conical shape. Further, a solid phase extracting agent 1008 to be packed having a performance suitable to extraction of a target component is used.

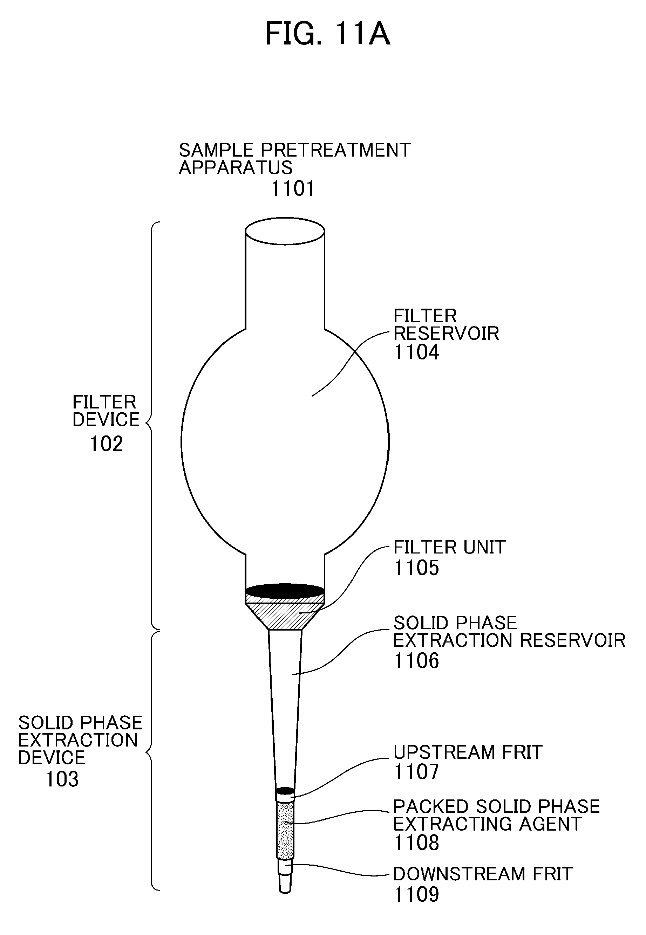

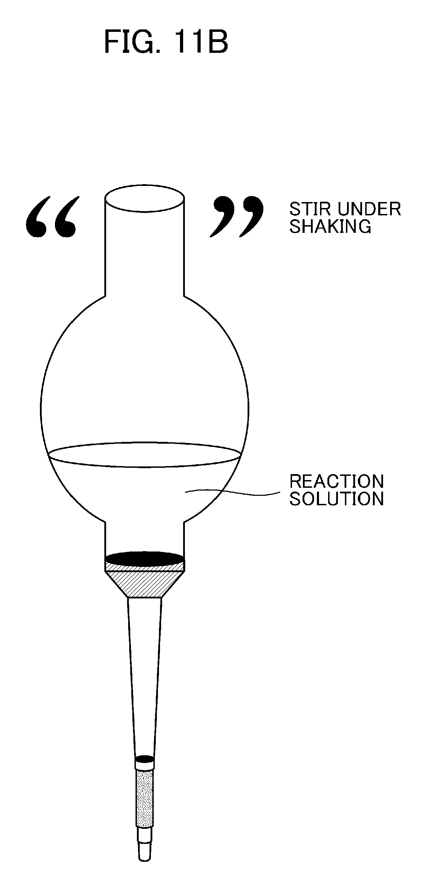

For the structure of the filter device 1002, the filter reservoir 1104 may have a bulged shape as shown, for example, in Fig. 11A and Fig. 11B so as to facilitate shaking and stirring upon mixing of the sample and each of reagents.

The sample pretreatment apparatus 1001 of Example 7 of the invention has a feature in which a dispenser (pipetter) can be attached to opening at the upper end of the filter device 1002, wherein the aimed component can be adsorbed directly to the solid phase extracting agent 1008 along with filtration by way of the filter unit 1005 by the discharging operation without temporary collection.

Further, the subsequent washing step in the solid phase extraction treatment has a feature in which the opening at the lower end of the solid phase extraction device 1003 is dipped in a washing solution stored in a vessel, and the washing solution is sucked and discharged to the solid phase extracting agent 1008 packed in the lower end of the solid phase extraction device 1003 by the pipetting operation of the dispenser (pipetter) attached to the upper end opening of the filter device 1002, thereby washing and removing miscellaneous components adsorbed non-specifically to the solid phase extracting agent 1008.

Further, also for the elution step, an aimed component specifically adsorbed to the solid phase extracting agent 1008 may be eluted and collected by the same sucking and discharging operation while changing the washing solution to a necessary amount of an eluate. Alternatively, the aimed component specifically adsorbed to the solid phase extracting agent 1008 may be eluted and collected by sucking a necessary amount of the eluate and discharging the same to a separately provided collection vessel.

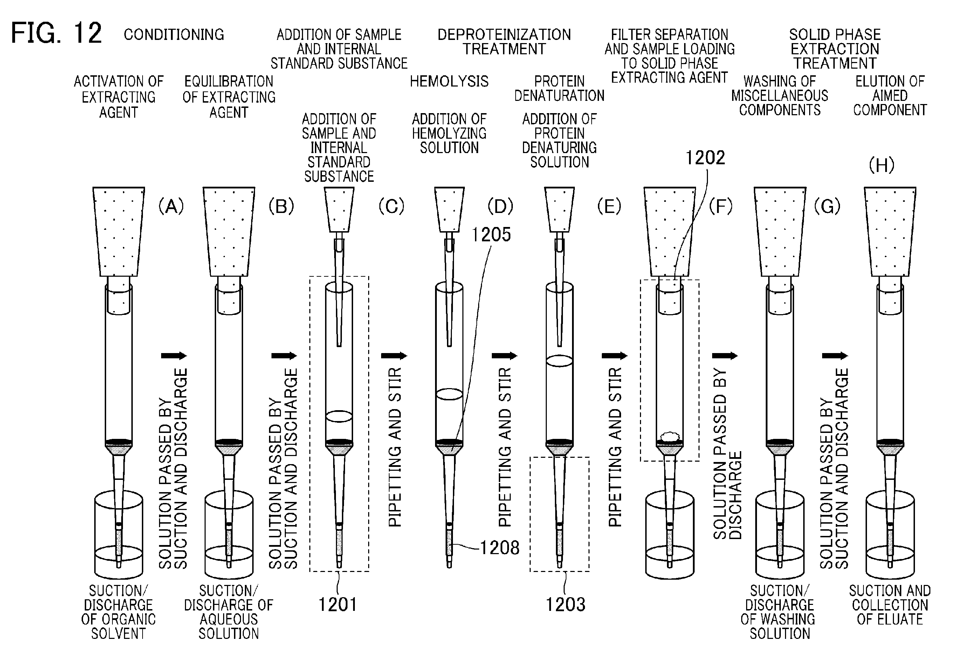

An operation method when a sample is prepared by using the sample pretreatment apparatus 1001 is to be described with reference to Fig. 12.

Respective reagents used for conditioning the solid phase extracting agent 1208, adsorption of an aimed component, removal of miscellaneous components, and elution and collection of the aimed component are selected properly according to the characteristic of the solid phase extracting agent 1208. For the sake of convenience, an example in a case where a solid phase extracting agent 1208 is used in a reversed phase mode is shown in this example.

As shown in Fig. 12(A), an opening at the lower end of the solid phase extraction device 1203 is dipped in an organic solvent, for example, methanol stored in a vessel and the organic solvent is sucked and discharged to the solid phase extracting agent 1208 packed in the lower end of the solid phase extraction device 1203 by the pipetting operation of a dispenser (pipetter) attached to the opening at the upper end of the filter device 1202. By the operation, functional groups of the solid phase extracting agent 1208 are activated.

Then, as shown in Fig. 12(B), an opening at the lower end of the solid phase extraction device 1203 is dipped in an aqueous solution stored in a vessel and the aqueous solution is sucked and discharged to the solid phase extracting agent 1208 packed in the lower end of the solid phase extraction device 1203 by pipetting operation of a dispenser (pipetter) attached to the opening at the upper end of the filter device 1202. The activated solid phase extracting agent 1208 is equilibrated by the operation thereby completing the conditioning of the solid phase extracting agent 1208.

Then, as shown in Fig. 12(C), a sample is added to the filter device 1202. In this step, when an extraction component is measured, for example, by mass analysis, an internal standard substance is also added and stirred sufficiently.

Then, as shown in Fig. 12(D), when the sample is a whole blood and it is necessary to take-out intra-cell components, a necessary amount of hemolyzing solution is added and stirred sufficiently. Blood cells are disrupted by the operation.

Then as shown in Fig. 12(E), a necessary amount of a protein denaturing solution is added to the filter device 1202 and stirred sufficiently. By the operation, protein in the sample are denatured to form aggregates.

Then, as shown in Fig. 12(F), a dispenser (pipetter) is attached to the opening at the upper end of the filter device 1202 and aggregates are left on the side of the filter device 1202 and the filtrate is supplied as it is to the solid phase extracting agent 1208 by way of the filter unit 1205 by the discharging operation without collection of the filtrate. A solution discharged from the lower end of the solid phase extraction device 1203 is discarded. By the operation, the aimed component is adsorbed to the solid phase extracting agent 1208, and miscellaneous components not adsorbed to the solid phase extracting agent 1208 are removed.

Then, as shown in Fig. 12(G) the opening at the lower end of the solid phase extraction device 1203 is dipped in a washing solution stored in a vessel, and the washing solution is sucked and discharged to the solid phase extracting agent 1208 packed in the lower end of the solid phase extraction device 1203 by the pipetting operation of a dispenser (pipetter) attached to the opening at the upper end of the filter device 1202. By the operation, miscellaneous components adsorbed not-specifically to the solid phase extracting agent 1208 are removed.

Then as shown in Fig. 12(H), the opening at the lower end of the solid phase extraction device 1203 is dipped in a necessary amount of an eluate stored in a vessel, and the eluate is sucked and discharged to the solid phase extracting agent 1208 packed in the lower end of the solid phase extraction device 1203 by the pipetting operation of a dispenser (pipetter) attached to the opening at the upper end of the filter device 1202. By the operation, the aimed component specifically adsorbed to the solid phase extracting agent 1208 is eluted and collected.

Alternatively, the aimed component specifically adsorbed to the solid phase extracting agent 1208 may be eluted and collected by dipping the opening at the lower end of the solid phase extraction device 1203 in an eluate stored in a vessel, sucking a necessary amount of the eluate to a solid phase extracting agent 1208 packed in the lower end of a solid phase extraction device 1203 by the pipetting operation of the dispenser (pipetter) attached to the opening at the upper end of the filter device 1202 and discharging the same to a separately provided collection vessel.

Also in Example 7 of the invention, the same effect as that of Example 2 can be obtained.

### Example 8

Then, a sample pretreatment apparatus as Example 8 of the invention is to be described. Example 8 has a plate-type configuration in which a plurality of sample pretreatment apparatus (apparatus) are arranged.

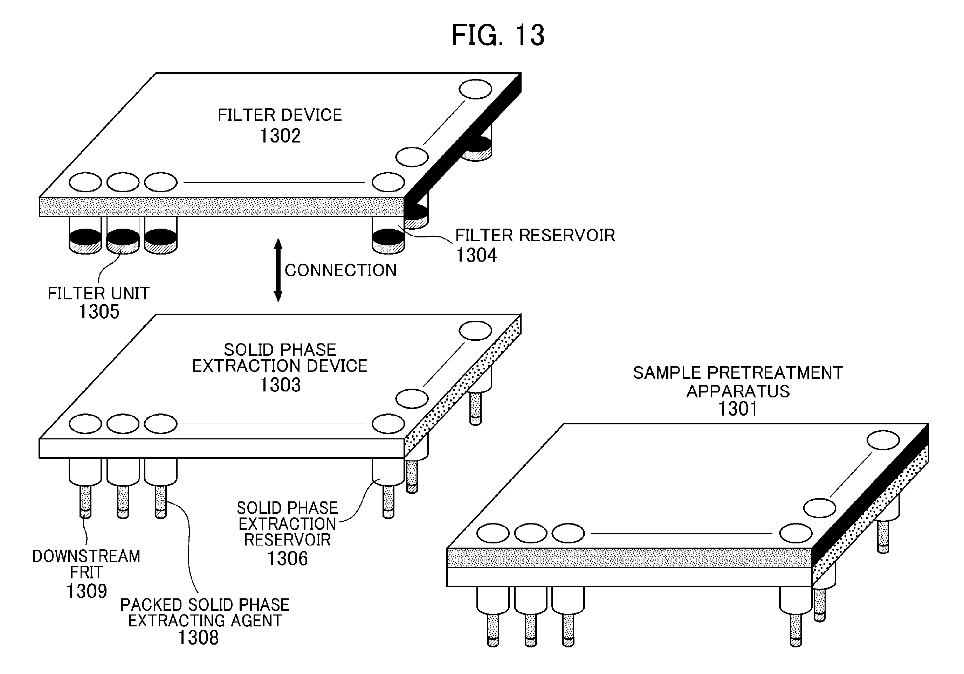

Fig. 13 is an explanatory view of a plate-type sample pretreatment apparatus (apparatus) 1301 as Example 8 of the invention.

The plate-type pretreatment apparatus 1301 has a structure in which various types of sample pretreatment apparatus shown in Examples 1 to 5 are arranged in plurality as an array.

That is, a filter device 1302 has a plate-like shape in which a plurality of filter units 1305 each having a filter reservoir 1304 are arranged and fixed to a filter device 1302. Then, a solid phase extraction device 1303 also has a plate-like shape in which a plurality of members each having a downstream frit 1309, a packed solid phase extraction agent 1308, and a solid phase extraction reservoir 1306 integrated together are arranged and fixed to the solid phase extraction device 1303.

The filter device 1302 and the solid phase extraction device 1303 are connected to each other, and the filter reservoir 1304, the filter unit 1305, the downstream frit 1309, the packed solid phase extraction agent 1308, and the solid phase extraction reservoir 1306 are integrated to form the sample pretreatment apparatus 1301.

The operation method of the sample pretreatment apparatus 1301 is performed according to the treatment steps described for each of Examples 1 to 5, in which a plurality of devices corresponding to wells are treated in parallel.

The operation method when a sample is prepared by using the sample pretreatment apparatus 1301 is identical with that of Examples 3 to 7 and a plurality of sample pretreatment apparatus 1301 are treated simultaneously.

Also in Example 8 of the invention, the same effect as that of Example 2 can be obtained and, in addition, a plurality of the pretreatment apparatus can be treated simultaneously.

### Example 9

Then, a sample pretreatment apparatus as Example 9 of the invention is to be described. Example 9 has a valve switching-type apparatus configuration.

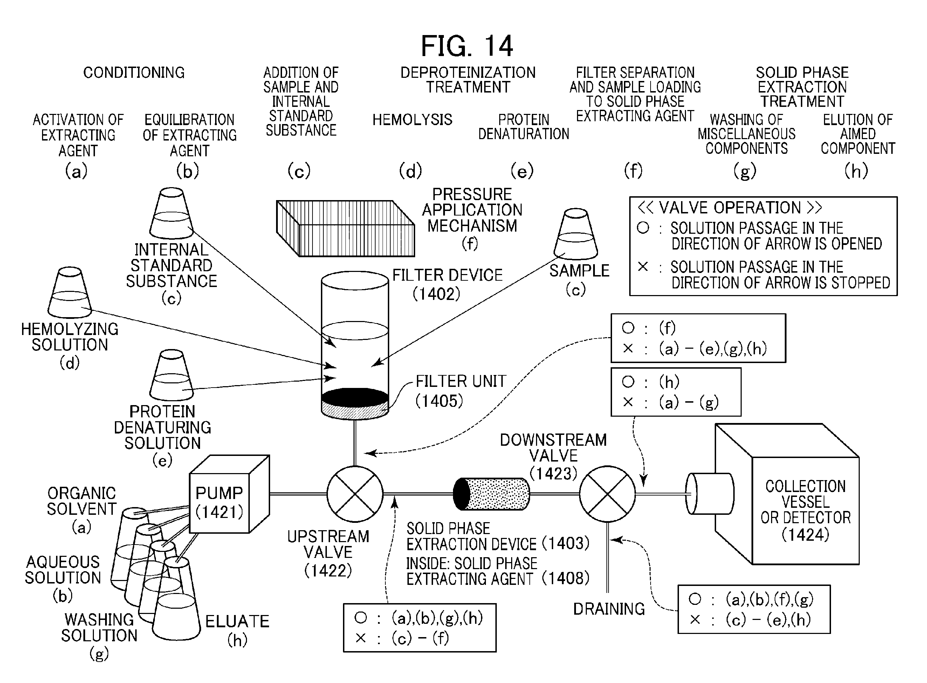

Fig. 14 is an explanatory view of a sample pretreatment apparatus (apparatus) 1401 as Example 9 of the invention.

The sample pretreatment apparatus 1401 as Example 9 of the invention has a configuration in which the addition of a sample and reagents to the solid phase extracting agent 1408 and a pressure application step are controlled by switching of flow channels using a valve switching mechanism.

In Fig. 14, as the configuration of the sample pretreatment apparatus, a filter device 1402, a solid phase extraction device 1403, a reagent supply pump 1421, a collection vessel 1424 or a detector 1424 are connected with pipelines respectively by way of valves 1422 and 1423. That is, the valve 1422 is disposed on the upstream side of the solid phase extraction device 1403, and the filter device 1402 and the reagent feeding pump 1421 are connected to the valve 1422. On the other hand, a structure capable of switching between the discharging of liquid waste and the collection of eluant is also provided on the downstream side of the solid phase extraction device 1403 and this is shown as a valve 1423 for the sake of convenience in the drawing.

An operation method when a sample is prepared by using the sample pretreatment apparatus 1401 is to be shown below.

Respective reagents used for conditioning the solid phase extracting agent 1408, adsorption of an aimed component, removal of miscellaneous components, and elution and collection of the aimed component are selected properly according to the characteristic of the solid phase extracting agent 1408. For the sake of convenience, an example when a solid phase extracting agent 1408 is used in a reversed phase mode is shown in this example.

At first, an organic solvent, for example, methanol is supplied to the solid phase extracting agent 1408 of the solid phase extraction device 1403 by the pump 1421 and a solution discharged from a downstream pipeline of the solid phase extraction device 1403 is discarded. In this case, the upstream valve 1422 opens a flow channel from the pump 1421 to the solid phase extraction device 1403, and the downstream valve 1423 opens a flow channel from the solid phase extraction device 1403 to waste draining. By the operation, functional groups of the solid phase extracting agent 1408 are activated.

Then, an aqueous solution, for example, a buffer is passed through the solid phase extracting agent 1408 of the solid phase extraction device 1403 by the pump 1421 and a solution discharged from the pipeline downstream of the solid phase extraction device 1403 is discarded. In this step, the upstream valve 1422 opens the flow channel from the pump 1421 to the solid phase extraction device 1403 and the downstream valve 1423 opens the flow channel from the solid phase extraction device 1403 to draining. By the operation, the activated solid phase extracting agent 1408 is equilibrated to complete conditioning for the solid phase extracting agent 1408.

Then, a sample is added to the filter device 1402. When the extracted component is measured, for example, by mass analysis, an internal standard substance is also added and stirred sufficiently. In this step, the solution does not pass through the upstream valve 1422 and the downstream valve 1423.

Then, when the sample is a whole blood and it is necessary to take-out intra-blood cell components, a necessary amount of hemolyzing solution is added and stirred sufficiently. By the operation, the blood cells are disrupted. In this step, the solution does not pass through the upstream valve 1422 and the downstream valve 1423.

Then, a necessary amount of a protein denaturing solution is added to the filter device 1402 and stirred sufficiently. By the operation, proteins in the sample are denatured to form aggregates. In this step, the solution does not pass through the upstream valve 1422 and the downstream valve 1423.

Then, a pressure is applied to the filter device 1402 and, by pressurization to the opening at the upper end or suction from the opening at the lower end of the filter device 1402, aggregates are left on the side of the filter device 1402 and the filtrate is supplied as it is to the solid extracting agent 1408 by way of the filter unit 1405 without collection of the filtrate. A solution discharged from the lower end of the solid phase extraction device 1403 is discharged. In this step, the upstream valve 1422 opens the flow channel from the filter device 1402 to the solid phase extraction device 1403, and the downstream valve 1423 opens the flow channel from the solid phase extraction device 1403 to draining. By the operation, the aimed component is adsorbed to the solid phase extracting agent 1408 and miscellaneous components not adsorbed to the solid phase extracting agent 1408 are removed.

Then, a washing solution is passed through the solid phase extracting agent 1408 of the solid phase extraction device 1403 by the pump 1421 and a liquid discharged from the downstream pipeline of the solid phase extraction device 1403 is discarded. In this step, the upstream valve 1422 opens the flow channel from the pump 1421 to the solid phase extraction device 1403, and the downstream valve 1423 opens the flow channel from the solid phase extraction device to the draining. By the operation, miscellaneous components adsorbed not-specifically to the solid phase extracting agent 1408 are removed.

Then, an eluate is passed through the solid phase extracting agent 1408 of the solid phase extraction device 1403 by the pump 1421 and a solution discharged from the downstream pipeline of the solid phase extraction device 1403 is collected in a collection vessel 1424 or supplied to a detector 1424. In this step, the upstream valve 1422 opens the flow channel from the pump 1421 to the solid phase extraction device 1403 and the down stream valve 1423 opens the flow channel from the solid phase extraction device 1403 to the collection vessel 1424 or to the detector 1424. By the operation, an aimed component adsorbed specifically to the solid phase extracting agent 1408 is eluted and collected.

Fig. 14 denotes an extracting agent activation treatment as (a), an extracting agent smoothing treatment as (b), a sample and internal standard substance addition treatment as (c), a hemolysis treatment as (d), a protein denaturation treatment as (e), filter separation and sample loading treatment to the solid phase extracting agent as (f), a miscellaneous products washing treatment as (g), and an aimed component elution treatment as (h), and corresponding treatments (a) to (h) are attached to the sample, solution, substance, and mechanism used in each of the treatments.

Further, for the operations of the valves 1422 and 1423 in Fig. 14, treatments for passing solution to the portions shown by arrows are indicated on the side of round marks and treatments not passing solution to the portions shown by arrows are indicated on the side of the marks (x).

### Example 10

Then, the sample pretreatment method and apparatus as Example 10 of the invention are to be described. Example 10 provides a method and an apparatus using a solid phase extracting agent with previous addition of an internal standard substance.

The sample pretreatment apparatus in Example 10 has a feature that the solid extracting agent is not previously packed in the solid phase extraction device as has been done in the apparatus configuration shown in each of the examples described above but they are provided separately. That is, a downstream frit is previously attached near the opening at the lower end of the solid phase extraction device and the solid phase extracting agent is filled therein and used for preparation of a sample. The upstream frit may be attached optionally after the packing of the solid phase extracting agent in the solid phase device.

The solid phase extracting agent used therein may be in a dried state or in a slurry form.

When the solid extracting agent is provided in the slurry form, the solid extracting agent may be conditioned or not conditioned.

When the solid extracting agent is provided in a conditioned slurry form, the slurry may be in a state with or without previous addition of the internal standard substance.

The conditioning step can be saved depending on the state of the solid extracting agent provided separately from the solid phase extraction device as described above.

Further, when a necessary amount of an internal standard substance for measurement of an aimed component is previously added to the conditioned solid phase extracting agent, this can be provided as a kit used exclusively for measurement of an aimed component. In this case, after the packing of the solid phase extracting agent in the solid phase extraction device, operation can be started from the sample addition step without the conditioning step, so that final eluates can be supplied directly for measurement without the step of addition of the internal standard substance.

In the case of the slurry as described above, a necessary amount of a corrosion inhibitor such as sodium azide may be added and provided.

As described above, the invention provides a conditioned packed slurry with previous addition of a necessary amount of an internal standard substance under an adsorbable condition as a solid phase extracting agent for use in particular measurement. Then, it has a feature capable of performing hemolysis and deproteinization treatment in one sample pretreatment apparatus and performing solid phase extraction of an aimed component in a filtrate after filtration of reaction products collectively without temporary collection of products formed in the intermediate process. Alternatively, it may be also considered to provide a pre-packed apparatus by packing a solid phase extracting agent with previous addition of an internal standard substance to a solid phase extraction device and tightly sealing the same so as not to evaporate a solvent. In this case, a filter device used for deproteinization may also be disposed on the upstream side of the solid phase extracting agent.

Further, it is also possible to provide a pretreatment method and an apparatus (kit) thereof by connecting reaction vessel (filter device) having a mechanism for filtration treatment of a reaction product and a solid phase extraction device, thereby capable of supplying a filtrate directly to the solid phase extracting agent without temporary collection of the filtrate.

It is possible to supply a biological sample such as a blood containing many miscellaneous components directly to the device with no pretreatment and supply extracts obtained by the treatment in the apparatus directly to an analysis apparatus such as MS.

This can shorten the steps and TAT by saving the step of temporary collection of the filtrate.

Further, it is possible to save the steps concerning the temporary collection of the filtrate and supply of the temporarily collected filtrate to the solid phase extraction unit and the operation can be simplified and the cost can be decreased by the pretreatment apparatus (kit).

Further, since the vessel for the temporary collection is no more necessary by the saving of the temporary collection step, as well as the number of consumption parts and the cost therefor can be saved, sample loss and carry over occurring in the temporary collection step can be avoided.

Further, by providing a prepack apparatus in which a previously conditioned solid phase extracting agent is packed in a solid phase extraction device and sealed tightly so that the solution wetting the solid phase extracting agent does not evaporate, the number of steps and TAT (turnaround-time) can be shortened in the sample pretreatment.

Further, by previously adding a necessary amount of an internal standard substance for a component as a target of measurement to a solid phase extracting agent already packed in a prepack device, the prepack device can be provided as a sample pretreatment apparatus used exclusively for the component as a target of measurement, so that a user can perform sample pretreatment with no provision of the internal standard substrate and the extracted component can be measured, for example, by mass analysis even when the step of addition of the internal standard substance is saved.

The conditioned solid phase extracting agent with previous addition of the necessary amount of the internal standard substance described above can be provided not only as a prepack device but also as a sample pretreatment kit used exclusively for the measurement of a target component by providing as a slurry before packing in the solid phase extraction device together with the not yet packed solid phase extraction device, so that a user can appropriately control the amount of a slurry in accordance with the extraction amount of the target component for measurement, and can perform sample pretreatment with no preparation of the internal standard substance and can measure the extracted component, for example, by mass analysis, etc. even when the step of addition of the internal standard substance is saved.

The present invention is applicable not only to the field of clinical inspection but is applicable generally also in the field of analysis requiring purification from miscellaneous components for the detection of an aimed component. For example, the invention is applicable to the practical use in the field, for example, of environments, foods, medical uses, public safety (counter terrorism/illegal drugs), etc., and also to the fundamental/applied research thereof.

### Description of Reference Numerals

| | |
|---|---|
| 101 | Whole blood treatment step (hemolysis treatment and deproteinization treatment), |
| 102 | Solid phase extraction treatment step, |
| 103 | Whole blood and solid phase extraction collective treatment step according to the invention, |
| 301 | Sample pretreatment apparatus, |
| 302 | Filter device, |
| 303 | Solid phase extraction device, |
| 304 | Filter reservoir, |
| 305 | Filter unit, |
| 308 | Solid phase extracting agent, |
| 311 | Upstream bottom of filter unit, |
| 401 | Sample pretreatment apparatus, |
| 402 | Filter device, |
| 403 | Solid phase extraction device, |
| 404 | Filter reservoir, |
| 405 | Filter unit, |
| 406 | Solid phase extraction reservoir, |
| 407 | Upstream frit, |
| 408 | Solid phase extracting agent, |
| 409 | Downstream frit, |
| 411 | Upstream bottom of filter unit, |
| 413 | Upstream frit bottom, |
| 414 | Packing height, |
| 415 | Downstream frit bottom, |
| 501 | Sample pretreatment apparatus, |
| 502 | Filter device, |
| 503 | Solid phase extraction device, |
| 505 | Filter unit, |
| 508 | Solid phase extracting agent, |
| 601 | Sample pretreatment apparatus, |
| 602 | Filter device, |
| 603 | Solid phase extraction device, |
| 604 | Filter reservoir, |
| 605 | Filter unit, |
| 606 | Solid phase extraction reservoir, |
| 607 | Upstream frit, |
| 608 | Solid phase extracting agent, |
| 609 | Downstream frit, |
| 611 | Upstream bottom of filter unit, |
| 613 | Upstream frit bottom, |
| 614 | Packing height, |
| 615 | Downstream frit bottom, |
| 616 | Luer-lock type screw-like structure, |
| 701 | Sample pretreatment apparatus, |
| 702 | Filter device, |
| 703 | Solid phase extraction device, |
| 705 | Filter unit, |
| 708 | Solid phase extracting agent, |
| 801 | Sample pretreatment apparatus, |
| 802 | Filter device, |
| 803 | Solid phase extraction device, |
| 804 | Filter reservoir, |
| 805 | Filter unit, |
| 808 | Solid phase extracting agent, |
| 809 | Downstream frit, |
| 811 | Upstream bottom of filter unit, |
| 812 | Downstream bottom of filter unit, |
| 813 | Upstream bottom of solid phase extracting agent upon packing, |
| 814 | Packing height, |
| 815 | Downstream frit bottom, |
| 901 | Sample pretreatment apparatus, |
| 902 | Filter device, |
| 903 | Solid phase extraction device, |
| 905 | Filter unit, |
| 908 | Solid phase extraction agent, |
| 911 | Upstream cap, |
| 912 | Downstream cap, |
| 1001 | Sample pretreatment apparatus, |
| 1002 | Filter device, |
| 1003 | Solid phase extraction device, |
| 1004 | Filter reservoir, |
| 1005 | Filter unit, |
| 1006 | Solid phase extraction reservoir, |
| 1007 | Upstream frit |
| 1008 | Solid phase extracting agent, |
| 1009 | Downstream frit, |
| 1011 | Upstream bottom of filter unit, |
| 1013 | Upstream frit bottom, |
| 1004 | Packing height, |
| 1015 | Downstream frit bottom, |
| 1101 | Sample pretreatment apparatus, |
| 1102 | Filter device, |
| 1103 | Solid phase extraction device, |
| 1104 | Filter reservoir, |
| 1105 | Filter unit, |
| 1106 | Solid phase extraction reservoir, |
| 1107 | Upstream frit |
| 1108 | Solid phase extracting agent, |
| 1109 | Downstream frit, |
| 1202 | Filter device, |
| 1203 | Solid phase extraction device, |
| 1205 | Filter unit, |
| 1208 | Solid phase extracting agent, |
| 1301 | Sample pretreatment apparatus, |
| 1302 | Filter device, |
| 1303 | Solid phase extraction device, |
| 1304 | Filter reservoir, |
| 1305 | Filter unit, |
| 1306 | Solid phase extraction reservoir, |
| 1308 | Solid phase extracting agent, |
| 1309 | Downstream frit, |
| 1401 | Sample pretreatment apparatus, |
| 1402 | Filter device, |
| 1403 | Solid phase extraction device, |
| 1405 | Filter unit, |
| 1408 | Solid phase extracting agent, |
| 1421 | Pump, |
| 1422 | Upstream valve, |
| 1423 | Downstream valve |
| 1424 | Collection vessel or detection device |

## Claims

1. A method of pretreating a biological sample, comprising:
supplying a biological sample and a deproteinizing reagent to a filter unit contained in a filter device;
supplying a filtrate from the filter unit to a solid phase extracting agent, the solid phase extracting agent being contained in a solid phase extraction device, and
extracting a solid phase of the biological sample from the filtrate contained in the solid phase extracting agent.

2. The method of pretreating a biological sample according to claim 1,
wherein the solid phase extraction device is a vessel,
the method comprising the steps of:
inserting the filter device into the solid phase extraction device;
supplying the biological sample and the deproteinizing reagent to the filter unit;
thereafter transferring the filtrate, from the filter unit to the solid phase extracting agent, by centrifugation; and
performing, by a suspension process, the solid phase extraction treatment of the biological sample transferred to the solid phase extracting agent.

3. The method of pretreating a biological sample according to claim 1,
wherein the filter device and the solid phase extraction device are each in a cylindrical shape and are connected to each other; and
wherein the filtrate is supplied from the filter unit to the solid phase extracting agent by providing a pressure control inside of the filter device.

4. The method of pretreating a biological sample according to claim 1,
wherein the filter device and the solid phase extraction device are each in a cylindrical shape,
the method further comprising:
connecting the filter device to the solid phase extraction device;
supplying the biological sample and the deproteinizing reagent from an opening of the filter device by a dispenser;
transferring the filtrate to the solid phase extracting agent from the filter unit;
supplying, by another dispenser, a solid phase extraction reagent to the solid phase extracting agent by way of a discharge port formed in the solid phase extraction device; and
extracting the solid phase of the biological sample from the filtrate contained in the solid phase extracting agent.

5. The method of pretreating a biological sample according to claim 1, wherein
the solvent composition used when the sample and the deproteinizing reagent are reacted in the filter device is determined in accordance with the solubility of a component as a target of extraction.

6. The method of pretreating a biological sample according to claim 5,
wherein, when the component as a target of extraction is a high hydrophobic drug, the solvent composition used when the sample and the deproteinizing reagent are reacted in the filter device is set to be 50% or more in terms of a final concentration of methanol.

7. The method of pretreating a biological sample according to claim 6,
wherein, when the component as the target of extraction is a blood penetrating drug, the sample is reacted with a hemolysis reagent in the filter device and then reacted with a protein denaturing reagent, and the filtrate passed through the filter unit of the filter device is supplied to the solid phase extracting agent.

8. The method of pretreating a biological sample according to claim 1,
wherein, for optimization of the adsorption performance of the component as a target of extraction to the solid phase extracting agent, the method further comprises:
reacting the sample with the deproteinizing reagent within the filter device;
diluting the reaction solution obtained; and
supplying the filtrate passed through the filter unit of the filter device to the solid phase extracting agent.

9. A biological sample pretreatment apparatus, comprising:
a filter device having a filter unit that filters a biological sample supplied thereto, and
a solid phase extraction device connected to the filter device, the solid phase extraction device containing therein a solid phase extracting agent to be supplied with the biological sample filtered through the filter unit.

10. The biological sample pretreatment apparatus according to claim 9,
wherein the filter device is connected not detachably to the solid phase extraction device.

11. The biological sample pretreatment apparatus according to claim 9,
wherein the filter device is connected detachably to a solid phase extraction device.

12. The biological sample pretreatment apparatus according to claim 9,
wherein the solid phase extraction device has an upstream frit, and the filter unit of the filter device also serves as an upstream frit of the solid phase extraction device.

13. The biological sample pretreatment apparatus according to claim 9,
wherein the solid phase extraction device has an upstream frit, and the area of the filter unit of the filter device is not less than that of the upstream frit of the solid phase extraction device.

14. The biological sample pretreatment apparatus according to claim 13,
wherein the packing height of the solid phase extracting agent in the solid phase extraction device is not less than the diameter of the upstream frit.

15. The biological sample pretreatment apparatus according to claim 9,
wherein the upstream opening of the filter device is an injection port for a sample, a deproteinizing reagent, and a reagent for quantitative measurement, and having a dispenser attached thereto.

16. The biological sample pretreatment apparatus according to claim 9,
wherein the solid phase extracting agent is a conditioned slurry.

17. The biological sample pretreatment apparatus according to claim 16,
wherein an internal standard substance for a component as a target of measurement is added to the conditioned slurry.

18. The biological sample pretreatment apparatus according to claim 17,
wherein the apparatus has a structure in which the conditioned solid phase extracting agent with addition of the internal standard substance for the component as the target of measurement is packed in the inside of the solid phase extraction device, and the solid phase extraction device is tightly sealed so that the solvent in which the solid phase extracting agent is dipped does not evaporate.
